# EUROPEAN PATENT APPLICATION

(11) **EP 1 273 641 A1**
(43) Date of publication of application: **08.01.2003**
(21) Application number: 01981001.9
(22) Date of filing: 07.11.2001
(51) Int. Cl.: C09D 191/00, C09D 5/00, C09D 101/02, C09D 103/02, C09D 105/00, C09D 193/00, C10M 159/02, C10M 137/02, F16B 33/06

(54) **TIGHTENING MEMBER, COMPOSITION OF PAINT FOR THE MEMBER, AND TIGHTENING DEVICE**

(30) Priority: 15.11.2000 JP 2000348650
(71) Applicant: Meira Kabushiki Kaisha, Nagoya-shi, Aichi 453-0015 (JP)
(72) Inventor: TAKEZAWA, Hikaru, C/O MEIRA KABUSHIKI KAISHA, Seki-shi, Gifu 501-3923 (JP)
(74) Representative: Kemp, Paul Geoffrey
(86) International application number: JP0109724
(87) International publication number: WO02040608

(57) **Abstract**

A natural resin is dissolved in liquid oils and fats while a phosphate-based extreme pressure additive is evenly mixed in to prepare a paint composition. After the paint composition is applied to a high-strength hexagon head bolt (2) and a hexagon nut (3), centrifugal separation is performed for removal of excess paint composition and drying of the composition. Coating films can easily and quickly be formed. The high-strength hexagon head bolt (2) and the hexagon nut (3) thus provided with a coating film are fastened to each other by screwing. The heat and pressure generated during the fastening process cause the phosphate-based extreme pressure additive to react with the metal on the surface of the high-strength hexagon head bolt (2) and the hexagon nut (3) so that the phosphate-based extreme pressure additive in the film bonds to the metal. The coefficient of friction is reduced regardless of the smoothness of the surface of the high-strength hexagon head bolt (2) or the hexagon nut (3). As a low, stable coefficient of friction produces a stable torque-axial tension relationship, a stable fastened condition can easily be achieved.

## Description

### TECHNICAL FIELD

The present invention relates to a paint composition for coating a fastening member to be used for fastening by screwing. The invention also relates to a fastening member having a coating formed by application of said paint composition, and a fastening system having a combination of fastening members that are coated with said paint composition.

### BACKGROUND OF THE INVENTION

An example of conventionally known structures of a bolt set that is a fastening system comprising a fastening member, which is a bolt having external threads, and another fastening member, which is a nut to be screwed onto said bolt, is disclosed in Japanese Patent Provisional Publication No. 06-80983.

The bolt set disclosed in Japanese Patent Provisional Publication No. 06-80983 is characterized in that a bolt, a nut and washers or other similar members to be disposed between the bolt or the nut and the objects to be fastened by screwing are coated with a coefficient-of-friction reduction agent in order to reduce the friction generated during the screwing operation, and also to obtain a stable torque/axial tension relationship by giving a constant, low coefficient of friction to the fastening system. The coefficient-of-friction reduction agent is prepared by dissolving a water-miscible synthetic resin, a polyethylene oxide, a nonionic surfactant and an ethylene oxide/propylene oxide copolymer in an aqueous solvent. The water-miscible synthetic resin permits the agent to be fixed as a coating film firmly to the fastening members. The polyethylene oxide serves as a wax to give a low coefficient of friction. The nonionic surfactant is to obtain a stable torque/axial tension relationship by giving each fastening member a constant coefficient of friction regardless of the conditions of the surface of the fastening member. The ethylene oxide/propylene oxide copolymer contributes to reduction of the coefficient of friction and stabilization of the torque/axial tension relationship.

The coefficient-of-friction reduction agent disclosed in Japanese Patent Provisional Publication No. 06-80983 calls for using a water-miscible synthetic resin as the base of the coating and dissolving it in water. Therefore, in order to form a coating, the agent has to undergo hot air drying or be otherwise dried after being applied to the fastening member. As production of the film requires a long period of time due to the drying process, improvements in manufacturing cannot be expected. Furthermore, should a fastening member coated with said agent be used in an environment where it is subject to the influence of heat, possible changes in the quality of an additive for reducing the coefficient of friction may reduce the axial tension or otherwise prevent achievement of desired characteristics.

Although a synthetic resin that is soluble in a volatile organic solvent, such as epoxy resin, urethane resin or styrene resin, may be used as the base of the coating, use of such a resin requires prevention of leakage and recovery of the organic solvent gas that has been produced during the drying process, and, therefore, presents a problem of an increase in size of the dryer.

In order to solve the above problem, an object of the present invention is to provide a fastening member paint composition which permits easy and quick formation of a coating having the ability of uniformly reducing the coefficient of friction and achieving a stable torque/axial tension relationship. Another object of the invention is to provide a fastening member coated with a film of such a paint composition, and a fastening system having a fastening member paired with another fastening member, both of which are coated with a film of said paint composition as a coating.

### DISCLOSURE OF THE INVENTION

A paint composition for a fastening member according to the present invention includes a phosphate-based extreme pressure additive, a natural resin and liquid oils and fats to permit said phosphate-based extreme pressure additive to be mixed with almost complete evenness and said natural resin dissolved therein, the phosphate-based extreme pressure additive having the function of reacting under high temperature and high pressure with a fastening member that has a metal at least on its surface and is intended to be fastened to another object by screwing. As using a phosphate-based extreme pressure additive, a natural resin, and liquid oils and fats to mix said phosphate-based extreme pressure additive and natural resin therein with almost complete evenness makes it possible to form a coating film, for example, by dipping a fastening member in the paint composition so as to apply the paint composition to the fastening member, and subsequently performing centrifugal separation to remove excess paint composition and dry the coating, the invention enables the easy and quick formation of a coating film and consequently facilitates improvement of working efficiency and reduction of production costs. As the heat and pressure generated during fastening of the fastening member by screwing cause the phosphate-based extreme pressure additive to react with the metal that is present at least on the surface of the fastening member so that the phosphate-based extreme pressure additive bonds in the form of a film to said metal, fastening operation is facilitated with the coefficient of friction reduced regardless of the smoothness of the surface of the fastening member, and a low, constant coefficient of friction produces a stable torque/axial tension relationship, thereby enabling the easy and stable fastening.

The phosphate-based extreme pressure additive of a paint composition according to another feature of the invention is a phosphoric ester. As a phosphoric ester is used as the phosphate-based extreme pressure additive, reaction of this phosphoric ester with the metal on the surface of the fastening member facilitates the formation of a coating film having stable characteristics. Therefore, a low coefficient of friction and a stable torque/axial tension relationship can easily be obtained.

The liquid oils and fats of a paint composition according to yet another feature of the invention contain a drying oil and a non-drying oil. As a drying oil and a non-drying oil are contained in the liquid oils and fats, unsaturated bonding of the drying oil facilitates dissolution of the natural resin and the even mixing of the phosphate-based extreme pressure additive, and the non-drying oil increases the viscosity of the paint composition and thereby permits the paint composition to be applied to the fastening member in good, stable conditions. As a result, a good coating film can easily be formed in a short period of time, while the non-drying oil, which remains in the coating film without volatilizing, reduces the coefficient of friction and increases the anticorrosion ability of the paint composition.

According to yet another feature of the invention, the drying oil has an iodine value of not less than 130 and the same polarity as the natural resin contained in the paint composition, and the non-drying oil has an iodine value of not more than 100. Using a drying oil having an iodine value of not less than 130 and the same polarity as the natural resin and a non-drying oil having an iodine value of not more than 100 facilitates dissolution of the natural resin and even dissolution and mixing of the phosphate-based extreme pressure additive and also enables the easy and quick formation of a good, uniform coating film that gives the fastening member a low coefficient of friction.

According to yet another feature of the invention, the paint composition for a fastening member is prepared by mixing together and stirring 15 to 30 wt% of phosphate-based extreme pressure additive, 3 to 12 wt% of natural resin, and 10 to 65 wt% of liquid oils and fats. As a result of the mixing ratio of 15 to 30 wt% of phosphate-based extreme pressure additive, 3 to 12 wt% of natural resin, and 10 to 65 wt% of liquid oils and fats, a coating film that offers a low coefficient of friction and a stable torque/axial tension relationship can easily be formed at low cost.

A fastening member according to the invention is characterized in that said paint composition is applied to at least a threaded portion of the fastening member so as to form a coating film of the paint composition thereon. As the paint composition for a fastening member is applied to at least the threaded portion of the fastening member so as to form a coating film of the paint composition thereon, a low, stable coefficient of friction and a stable torque/axial tension relationship can be achieved regardless of the conditions of the surface of the fastening member. Therefore, stable fastening is ensured.

A fastening system according to the invention is characterized in that it includes two fastening members to be screwed to each other and that said paint composition for a fastening member is applied to at least the threaded portion of either one of or both fastening members so as to form a coating film of the paint composition thereon. As a coating film is formed by applying the paint composition to at least the threaded portion of either one of or both fastening members that are intended to be screwed to each other, a low, stable coefficient of friction and a stable torque/axial tension relationship can be achieved regardless of the conditions of the surface of the fastening member or fastening members. Therefore, stable fastening is ensured.

### BRIEF DESCRIPTION OF THE DRAWINGS

Fig. 1 is a partially cutaway side view of a hexagon head bolt set according to an embodiment of the present invention to explain the state where the hexagon head bolt set is tightened.
Fig. 2 is a graph showing the torque/axial tension relationship of said hexagon head bolt set coated with a film of a paint composition containing 2.4 wt% natural resin.
Fig. 3 is a graph showing the torque/axial tension relationship of said hexagon head bolt set coated with a film of a paint composition containing 4.7 wt% natural resin.
Fig. 4 is a graph showing the torque/axial tension relationship of said hexagon head bolt set coated with a film of a paint composition containing 6.9 wt% natural resin.
Fig. 5 is a graph showing the torque/axial tension relationship of said hexagon head bolt set coated with a film of a paint composition containing 8.9 wt% natural resin.
Fig. 6 is a graph showing the torque/axial tension relationship of said hexagon head bolt set which has undergone blue chromate treatment after zinc plating the surface without being coated with a paint composition.
Fig. 7 is a graph showing the torque/axial tension relationship of said hexagon head bolt set which has undergone zinc plating of the surface followed by blue chromate treatment and coating with a paint composition.
Fig. 8 is a graph showing the torque/axial tension relationship of said hexagon head bolt set which has undergone zinc plating of the surface followed by blue chromate treatment, coating with a paint composition and washing with hot water.
Fig. 9 is a graph showing the torque/axial tension relationship of said hexagon head bolt set which has undergone yellow chromate treatment after zinc plating of the surface without being coated with a paint composition.
Fig. 10 is a graph showing the torque/axial tension relationship of said hexagon head bolt set which has undergone zinc plating of the surface followed by yellow chromate treatment and coating with a paint composition.
Fig. 11 is a graph showing the torque/axial tension relationship of said hexagon head bolt set which has undergone zinc plating of the surface followed by yellow chromate treatment, coating with a paint composition and washing with hot water.
Fig. 12 is a graph showing the torque/axial tension relationship of said hexagon head bolt set which has undergone green chromate treatment after zinc plating of the surface without being coating with a paint composition.
Fig. 13 is a graph showing the torque/axial tension relationship of said hexagon head bolt set which has undergone zinc plating of the surface followed by green chromate treatment and coating with a paint composition.
Fig. 14 is a graph showing the torque/axial tension relationship of said hexagon head bolt set which has undergone zinc plating of the surface followed by green chromate treatment, coating with a paint composition and washing with hot water.
Fig. 15 is a graph showing the torque/axial tension relationship of said hexagon head bolt set whose surface is plated with a zinc-chromium alloy instead of being coated with a film of a paint composition
Fig. 16 is a graph showing the torque/axial tension relationship of said hexagon head bolt set whose surface is plated with a zinc-chromium alloy and then coated with a paint composition.
Fig. 17 is a graph showing the torque/axial tension relationship of said hexagon head bolt set whose surface is plated with a zinc-chromium alloy and then coated with a paint composition and subsequently washed with hot water.

### PREFERRED EMBODIMENT OF THE INVENTION

An embodiment of the present invention is explained hereunder, referring to relevant drawings.

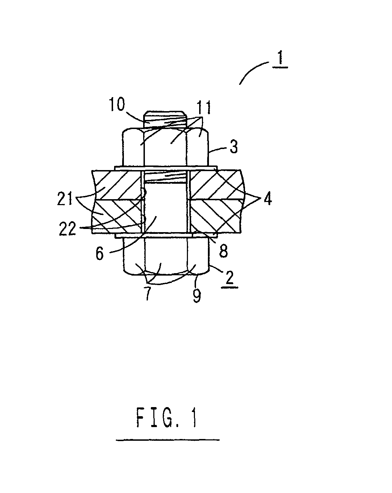

Referring to Fig. 1, numeral 1 denotes a hexagon head bolt set as a fastening system. The hexagon head bolt set 1 has a bolt serving as a fastening member (a high-strength hexagon head bolt 2 made of steel), a nut serving as another fastening member (a steel hexagon nut 3) and yet other fastening members (steel washers 4).

The high-strength hexagon head bolt 2 has a generally cylindrical shank 6. A hexagon head portion 9 having a diameter greater than that of the shank 6 is integrally formed at an end of the shank 6. The hexagon head portion 9 has nearly identical six side faces 7 and a flat, seat face 8 facing towards the other end of the shank 6. An external threaded portion 10 as a threaded portion is formed along the cylindrical outer surface of the other end of the shank 6.

The hexagon nut 3 is formed in the shape resembling a hexagonal donut. Similarly to the hexagon head portion 9 of the high-strength hexagon head bolt 2, the hexagon nut 3 has flat, nearly identical six side faces 11 that are arranged around the outer surface. An internal threaded portion (not shown) that serves as a threaded portion is formed around the center axis of the hexagon nut 3.

The washers 4 are formed in the shape of a disk having a center hole, through which the shank 6 of the high-strength hexagon head bolt 2 can be inserted.

The paint composition is in the state of a liquid containing a phosphate-based extreme pressure additive, a natural resin and liquid oils and fats and is intended to be applied to the surface of the high-strength hexagon head bolt 2 and the hexagon nut 3 so as to form a coating.

The phosphate-based extreme pressure additive of the paint composition is desirably comprised of a material that has the ability of reacting under high temperature and high pressure with iron (Fe) contained in the steel, which is the metal present on the surface of the high-strength hexagon head bolt 2 and the hexagon nut 3, so as to form a film bonding to the surface of the high-strength hexagon head bolt 2 and the hexagon nut 3. The most desirable examples of such materials are phosphoric esters, including dialkyl-phosphoric esters and trialkyl-phosphoric esters. However, the materials that can be used as the phosphate-based extreme pressure additive are not limited to those that react with iron; any material that has the ability to form a film by reacting with and bonding to nickel (Ni), cobalt (Co), chromium (Cr), aluminum (Al), zinc (Zn), copper (Cu), magnesium (Mg), lead (Pb), tin (Sn), etc., is permissible.

A substance that can be dissolved in the paint composition without using an organic solvent is used as the aforementioned natural resin. Examples of such substances include glue, gelatin, starch, Japanese lacquer, cellulose, dextrin, etc.

A mixed oil containing drying oil and non-drying oil can be used as the liquid oils and fats. Oil that has the same polarity as the natural resin so as to permit the natural resin to be dissolved therein and has an iodine value of not less than 130 is used as the drying oil. Examples of such oils include linseed oil, tung oil, pine oil, perilla oil and hemp seed oil, of which linseed oil, tung oil and pine oil are particularly desirable because of cost and other considerations. Oil that has an iodine value of not more than 100 and the ability of increasing the viscosity of the paint composition to some extent, in other words has a viscosity in the range of, for example, 250 cP to 280 cP is used as the non-drying oil. Examples of such oils include coconut oil, caster oil, peanut oil, sesame oil, tsubaki oil and olive oil, of which coconut oil, caster oil and peanut oil are particularly desirable because of cost and other considerations. A paint composition having a viscosity of less than 11 cP has a short life span. A viscosity exceeding 14 cP produces accumulation of the composition during the drying process and consequently causes some parts of the composition to remain wet, thereby inhibiting uniform drying. Therefore, it is desirable to limit the viscosity of the paint composition within the range of 11 cP to 14 cP.

The paint composition is prepared by mixing and blending together 15 to 30 wt% of phosphate-based extreme pressure additive, 3 to 12 wt% of natural resin, and 10 to 65 wt% of liquid oils and fats.

A paint composition containing phosphate-based extreme pressure additive of less than 15 wt% is unable to give a sufficiently low coefficient of friction or a stable torque-axial tension relationship when the high-strength hexagon head bolt 2 and the hexagon nut 3 are screwed together. Should the mixing ratio of the phosphate-based extreme pressure additive exceed 30 wt%, an excessively high viscosity causes the paint composition to accumulate between the threads of the bolt and the nut or inhibits even dispersion of the phosphate-based extreme pressure additive. Therefore, the mixing ratio of the phosphate-based extreme pressure additive is desirably limited within the range of 15 to 30 wt%.

A paint composition containing a natural resin of less than 3 wt% presents a problem in that the phosphate-based extreme pressure additive is unable to be held in the form of a coating film onto the surface of the high-strength hexagon head bolt 2 and the hexagon nut 3. As a result, a good, uniform coating may be prevented from being formed on the surface of the high-strength hexagon head bolt 2 or the hexagon nut 3 when centrifugal force is applied to facilitate formation of the coating. A natural resin of more than 12 wt% increases production costs and presents the possibility of super saturation and precipitation of the natural resin, while the coefficient of friction and the torque-axial tension relationship remain the same as the case where the mixing ratio is 12 wt%. Therefore, the mixing ratio of the natural resin is desirably limited within the range of 3 to 12 wt%.

Should the mixing ratio of the liquid oils and fats be less than 10 wt%, the reduction in the quantity of the oils and fats increases the viscosity of the paint composition, thereby making the paint composition opaque and inconvenient to apply and also increasing the frictional force. The liquid oils and fats with a mixing ratio of more than 65 wt% reduce the viscosity of the paint composition so that the composition becomes liquid and difficult to apply. Therefore, the mixing ratio of the liquid oils and fats is desirably limited within the range of 10 to 65 wt%.

Next, how a coating of the paint composition described above is formed on the high-strength hexagon head bolt 2 and the hexagon nut 3 is explained hereunder.

The paint composition prepared beforehand is applied to the surface of the high-strength hexagon head bolt 3 and the hexagon 3, which, too, have been prepared beforehand, by dipping the high-strength hexagon head bolt 3 and the hexagon 3 in the paint composition or in any other appropriate manner.

The high-strength hexagon head bolt 3 and the hexagon 3 dipped in the paint composition are subsequently taken out and set in a centrifugal separator to remove excess paint composition.

During this process of application of the centrifugal force, the drying oil in the liquid oils and fats volatilizes to some extent so that the paint composition attached to the surface of the high-strength hexagon head bolt 3 and the hexagon nut 3 is formed into a coating film that will not become attached when touched by a finger or some other object.

Next, how the high-strength hexagon head bolt 2 and the hexagon nut 3 described above are fastened together is explained hereunder.

First, a pair of objects 21,21 to be fastened together are placed one on top of the other so that generally circular threaded holes 22,22 that are respectively formed in the two objects 21,21 communicate with each other.

The high-strength hexagon head bolt 2, which is in the state that a washer 4 has been placed around its shank 6 beforehand, are inserted into the two threaded holes 22,22 communicating with each other with the external threaded portion 10 head-first so that the washer 4 is sandwiched by the seat face 8 of the hexagon head portion 9 and the surface of one of the objects 21,21.

Thereafter, the other washer 4 is placed around the shank 6 of the high-strength hexagon head bolt 2, which passes through the two threaded holes 22,22 communicating with each other and projects from the other object 21, and the internal threaded portion (not shown) of the hexagon nut 3 is screwed onto the external threaded portion 10 of the high-strength hexagon head bolt 2.

Then, by using an impact driver, a nut runner, or the like (not shown), the hexagon nut 3 is tightened until a predetermined torque is achieved.

Next, the function of the high-strength hexagon head bolt 2 and the hexagon nut 3 described above when they are fastened together is explained hereunder.

Non-drying oil is contained in the coating of the paint composition on the high-strength hexagon head bolt 2 and the hexagon nut 3. Therefore, when the internal threaded portion of the hexagon nut 6 is screwed onto the external threaded portion 10 of the high-strength hexagon head bolt 2, the non-drying oil functions as a lubricant so as to permit the hexagon nut 3 to be screwed with a low coefficient of friction.

When the high-strength hexagon head bolt 2 and the hexagon nut 3 are fastened together at a high speed by means of an impact driver or the like, friction between the external threaded portion 10 of the high-strength hexagon head bolt 2 and the internal threaded portion of the hexagon nut 3 generates heat, and the tightening operation produces pressure. The heat and pressure thus generated cause the phosphate-based extreme pressure additive in the paint composition to react and combine with the metal on the surfaces of high-strength hexagon head bolt 2 and the hexagon nut 3 so that a film of the phosphate-based extreme pressure additive covers the surface of high-strength hexagon head bolt 2 and the hexagon nut 3. The coating film of the paint composition formed as above is not only stable but, as it is situated between the surfaces of high-strength hexagon head bolt 2 and the hexagon nut 3, it also prevents contact or friction between the surfaces of the high-strength hexagon head bolt 2 and the hexagon nut 3. The phosphate-based extreme pressure additive thus reduces the coefficient of friction and permits the high-strength hexagon head bolt 2 and the hexagon nut 3 to be screwed together with a low coefficient of friction.

As described above, in cases where an impact driver or a similar tool that sets a tightening force in terms of torque is used, the paint composition permits the high-strength hexagon head bolt 2 and the hexagon nut 3 to be fastened together in a given, constant tightened state, thereby preventing the high-strength hexagon head bolt 2 from becoming loose resulting from insufficient tightening or breaking or being otherwise damaged due to excessive tightening.

Next, the function of the paint composition described above is explained, referring to the actual examples.

### (Actual Example 1)

First, tests were performed to determine appropriate mixing ratios.

Paint compositions were prepared by various mixing ratios, and the conditions of the paint compositions prepared were observed to ascertain and select those which exhibited an evenly mixed state. A high-strength hexagon head bolt 2 and a hexagon nut 3 were dipped in each one of the selected compositions for 10 seconds and subsequently taken out. Excess paint composition was then removed from the high-strength hexagon head bolt 2 and the hexagon nut 3 by centrifugal separation at a rotation speed of 500 rpm for 10 seconds by using a centrifugal separator so that a film of the paint composition is formed on the surface of the high-strength hexagon head bolt 2 and the hexagon nut 3. Thus test samples were prepared.

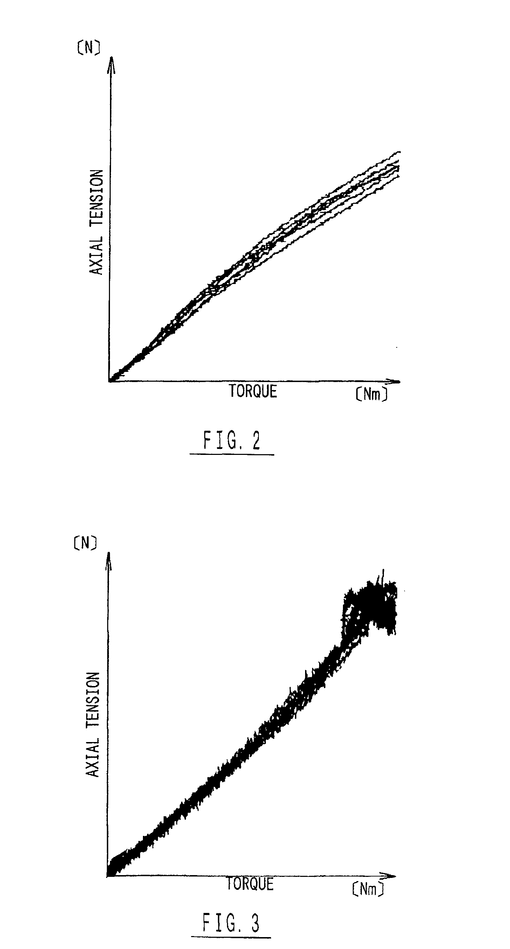

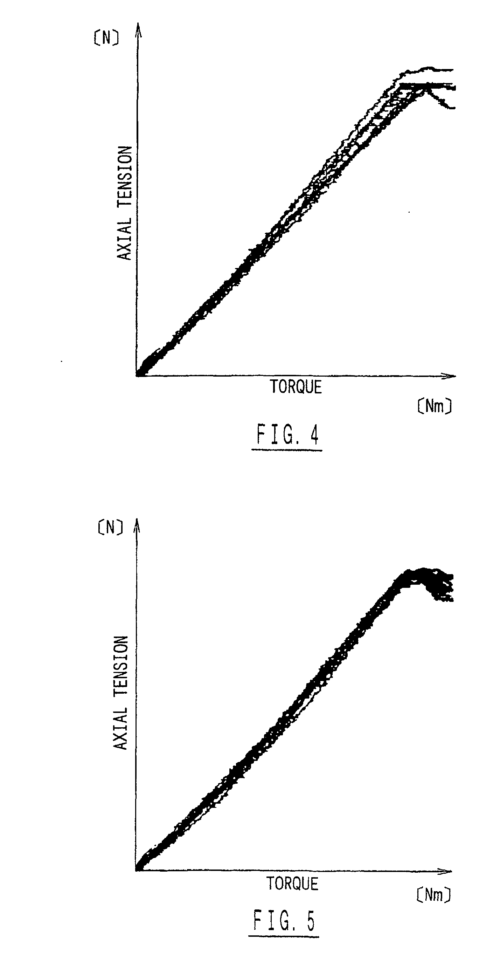

Each one of the high-strength hexagon head bolts 2 and the hexagon nuts 3 used for the tests was either treated with one of the three types of chromates after being plated with zinc or received treatment to form a coating of a zinc-chromium alloy on its surface. The appearance of the coating on each sample was observed, and each sample that had a satisfactory appearance was set in a fastening testing machine (a product of Meira Corporation) and tightened. Its torque coefficient was determined based on the torque-axial tension relationship. The results of the tests are shown in Figs. 2 to 5, of which Fig. 2 relates to a paint composition containing the natural resin of 2.4 wt%, Fig. 3 the natural resin of 4.7 wt%, Fig. 4 the natural resin of 6.9 wt%, and Fig. 5 the natural resin of 8.9 wt%.

From the conditions of the paint compositions themselves as well as the conditions of application and the torque coefficients obtained as above, samples containing the natural resin with mixing ratios of more than 12 wt% presented no variance in the torque-axial tension relationship compared with the case where the mixing ratio was 12 wt%. The greater the ratio of the natural resin, the more white precipitate was observed, when samples containing more than 15 wt% natural resin were left to be exposed to the outside air. Taking this fact and production cost into consideration, it is evident that up to 12 wt% is sufficient for the mixing ratio of the natural resin.

Each one of the paint compositions with a natural resin content of less than 3 wt% had a low viscosity so that each sample coated with such a paint composition had some parts on which no coating was formed after it had received the centrifugal force by the centrifugal separator and exhibited reduction in the torque coefficient of the high-strength hexagon head bolt 2 and the hexagon nut 3 as shown in Figs. 2 to 5. It is evident from these results that the mixing ratio of the natural resin may desirably be limited within the range of 3 to 12 wt%.

Each sample with a phosphate-based extreme pressure additive content of less than 15 wt% was unable to achieve a sufficiently low coefficient of friction or a stable torque-axial tension relationship when the high-strength hexagon head bolt 2 and the hexagon nut 3 were screwed together. When the mixing ratio of the phosphate-based extreme pressure additive exceeds 30 wt%, the paint composition becomes opaque, in other words unattractive in appearance, and also presents a problem of increased production cost. It is therefore evident that the mixing ratio of the phosphate-based extreme pressure additive may desirably be limited within the range of 15 to 30 wt%.

Each one of the paint compositions with a liquid oils and fats content of less than 10 wt% exhibited an excessively high viscosity and was inconvenient to apply to the high-strength hexagon head bolt 2 or the hexagon nut 3. Furthermore, with some of such compositions, the contents became opaque and could not be mixed evenly because of precipitation of the natural resin or for some other reasons. The samples containing the liquid oils and fats of more than 65 wt% had such a low viscosity that they became liquid and therefore difficult to apply. It is therefore evident that the mixing ratio of the liquid oils and fats may desirably be limited within the range of 10 to 65 wt%.

### (Actual Example 2)

Next, tests were performed to confirm the ability of the coating film to achieve a low coefficient of friction and stabilize the torque-axial tension relationship.

Four kinds of sets of high-strength hexagon head bolts 2 and hexagon nuts 3 were selected and used from among the kinds of nut-and-bolt sets used for Actual Example 1 described above.

In the same manner as in the case of Actual Example 1, the entire surface of these high-strength hexagon head bolts 2 and hexagon nuts 3 was coated with a film of a paint composition prepared beforehand. The paint composition used for the example 2 was prepared by mixing together and stirring a phosphate-based extreme pressure additive of approximately 31.8 wt%, a natural resin of approximately 3.5 wt%, a drying oil of approximately 40.2 wt% and a non-drying oil of approximately 24.5 wt%.

The high-strength hexagon head bolts 2 and the hexagon nuts 3 coated with a film of the paint composition as above were set in the same fastening testing machine as the one used in Actual example 1 and tightened so that their torque coefficients were determined based on the torque-axial tension relationship.

In order to confirm the stability of the coating films, the high-strength hexagon head bolts 2 and the hexagon nuts 3 provided with a coating film were washed by being submerged in hot water of 50 °C for one minute, and excess moisture was then removed from these high-strength hexagon head bolts 2 and hexagon nuts 3. Thereafter, the high-strength hexagon head bolts 2 and the hexagon nuts 3 were tightened in the same manner as above by using the fastening testing machine so that their torque coefficients were determined.

In order to confirm changes in the coating films with the elapse of time, tests were performed to determine the torque coefficients of high-strength hexagon head bolts 2 and hexagon nuts 2 that had been set aside for three months after formation of coating films.

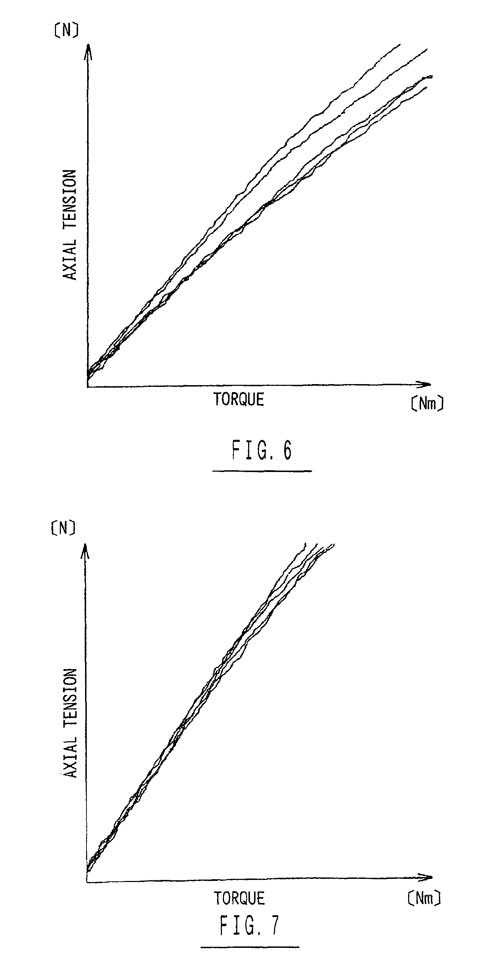

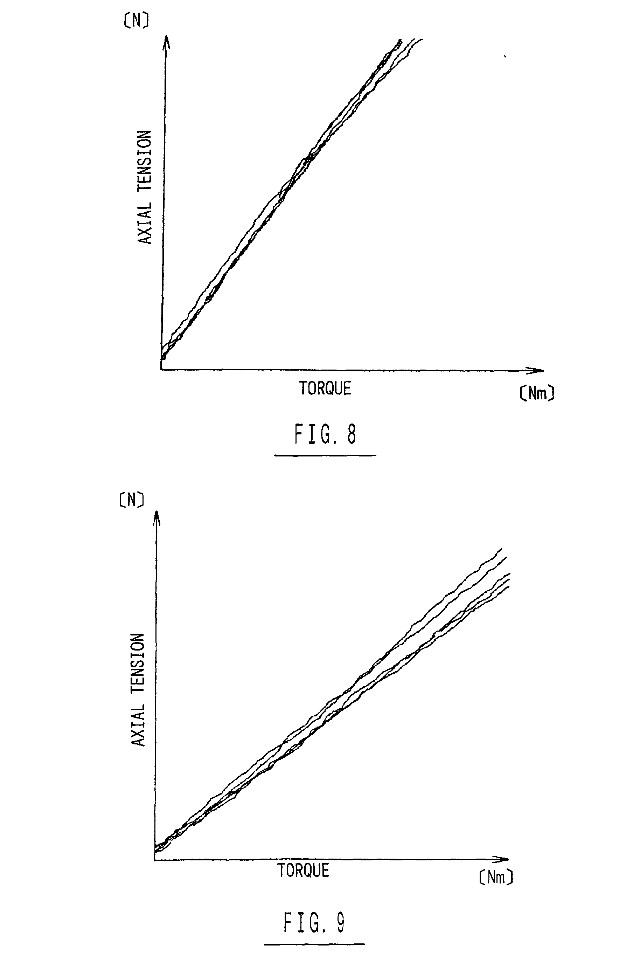

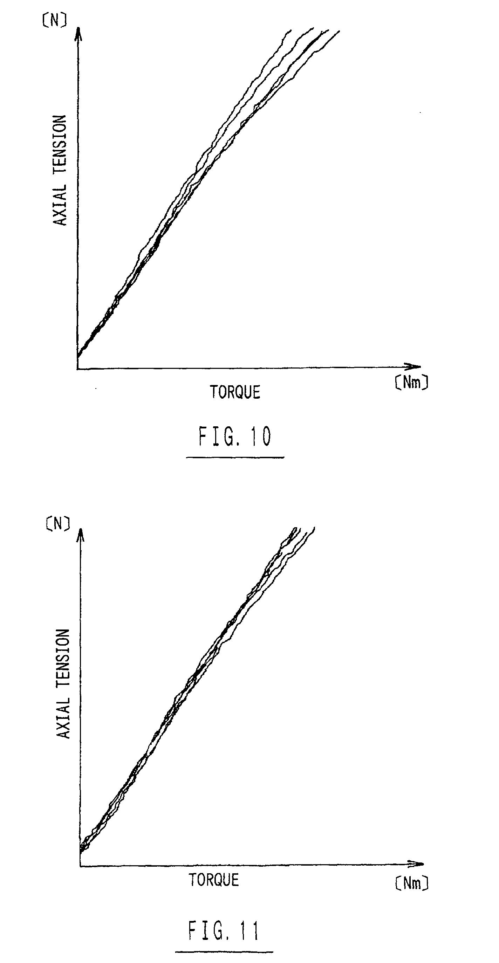

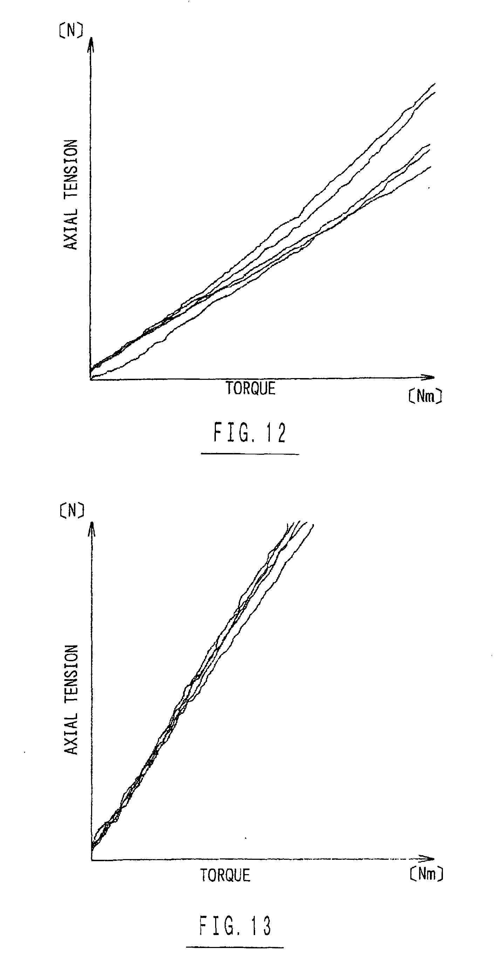

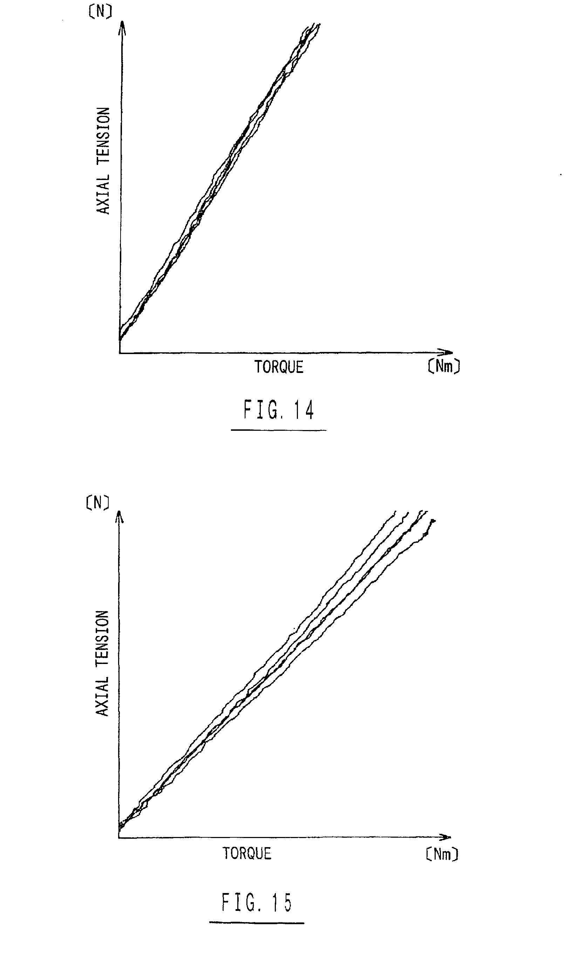

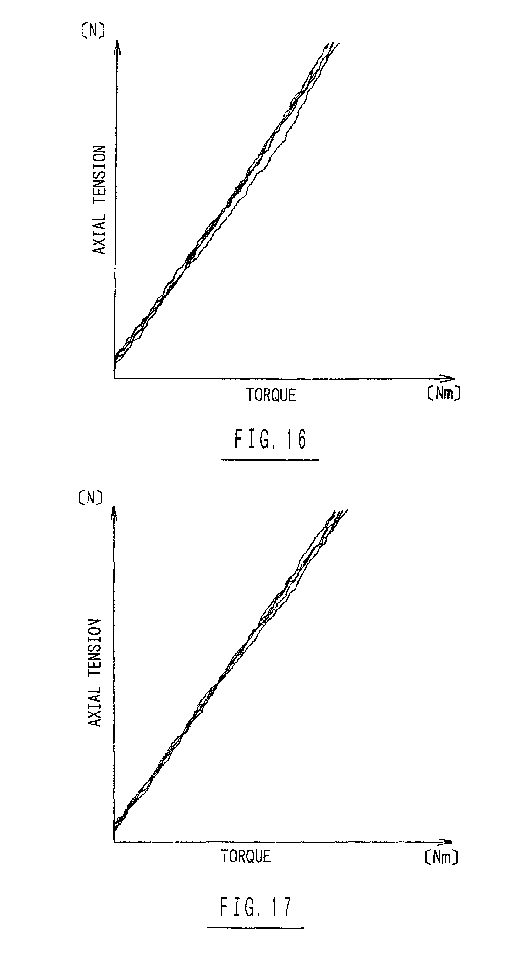

As comparison examples, the torque coefficients of high-strength hexagon head bolts 2 and hexagon nuts 2 that were not provided with a coating film were determined in the same manner as above. The results of these tests are shown in Figs. 6 to 17, wherein Figs. 6 to 8 relate to those which underwent zinc plating of the surface and subsequently blue chromate treatment; Figs. 9 to 11 relate to those which underwent zinc plating of the surface and subsequently yellow chromate treatment; Figs. 12 to 14 relate to those which underwent zinc plating of the surface and subsequently green chromate treatment; and Figs. 15 to 17 relate to those provided with a coating film of a zinc-chromium alloy. Figs. 6, 9, 12 and 15 relate to comparison samples; Figs. 7, 10, 13 and 16 relate to samples coated with the paint composition; and Figs. 8, 11, 14 and 17 relate to comparison samples washed with hot water after being coated with the paint composition.

It is evident from the test results shown in Figs. 6 to 17, the comparison samples that were not provided with a coating of the paint composition produced a variance in the torque coefficients, in other words the torque-axial tension relationship, resulting in a variance in the tightened condition. It has also been confirmed that the samples coated with the paint composition exhibited no variance in the torque coefficients and achieved a stable tightened condition as well as torque coefficients lower than those of the comparison samples. It is evident from this fact that the coefficient of friction of each sample was also reduced.

It has also been confirmed that washing with hot water caused no change in the torque-axial tension relationship; the coating on the samples remained stable after washing.

Of the samples that had been set aside for three months, the samples treated with a conventional lubricant exhibited deterioration in their characteristics as the lubricant dissipated. The samples coated with the paint composition of the present embodiment, however, exhibited no change in the torque-axial tension relationship and maintained stable characteristics for a long period of time.

According to the embodiment described above, a paint composition prepared by dissolving a natural resin in liquid oil and mixing in a phosphate-based extreme pressure additive so as to make a virtually evenly mixed mixture is applied to a high-strength hexagon head bolt 2 and a hexagon nut 3 to be fastened to each other by screwing so that the high-strength hexagon head bolt 2 and the hexagon nut 3 are coated with a film of said paint composition. As it is possible to form a coating film, for example, by dipping an object in the paint composition so as to apply the paint composition to the object, and subsequently performing centrifugal separation to remove excess paint composition and dry the coating, the embodiment enables the easy and quick formation of a coating film and consequently facilitates improvement of working efficiency and reduction of production costs. The heat and pressure generated when the high-strength hexagon head bolt 2 and the hexagon nut 3 that are coated with the paint composition are fastened to each other by screwing cause the phosphate-based extreme pressure additive to react with the metal on the surface of the high-strength hexagon head bolt 2 and the hexagon nut 3 so that the film containing the phosphate-based extreme pressure additive bonds to the surface of the high-strength hexagon head bolt 2 and the hexagon nut 3. As a result, fastening operation is facilitated with the coefficient of friction reduced regardless of the smoothness or other conditions of the surface of the high-strength hexagon head bolt 2 and the hexagon nut 3, and a low, constant coefficient of friction produces a stable torque/axial tension relationship, thereby enabling the easy and stable fastening.

The embodiment described above uses a phosphoric ester as the phosphate-based extreme pressure additive. As this phosphoric ester reacts with and bonds to the metal on the surface of the high-strength hexagon head bolt 2 and the hexagon nut 3, a coating film having stable characteristics can easily be formed. Therefore, a low coefficient of friction and a stable torque/axial tension relationship can easily be achieved.

The liquid far or oil used in the embodiment contains a drying oil and a non-drying oil. As unsaturated bonding of the drying oil facilitates dissolution of the natural resin and the even mixing of the phosphate-based extreme pressure additive, it is possible to form a coating film, for example, by dipping a high-strength hexagon head bolt 2 and a hexagon nut 3 in the paint composition so as to apply the paint composition thereto, and subsequently performing centrifugal separation to remove excess paint composition and dry the coating. Furthermore, as the non-drying oil increases the viscosity of the paint composition and thereby permit the paint composition to be applied to the surface of a fastening member in good, stable conditions, a good coating film can easily be formed in a short period of time. Because of the non-drying oil, which remains in the coating film without volatilizing, the coefficient of friction is further reduced so that a good, low coefficient of friction and a stable torque/axial tension relationship are achieved, and the coating is formed in the state of an oil film so that the water resistance and anticorrosion ability of the coating are improved.

As a drying oil having an iodine value of not less than 130 and the same polarity as the natural resin so as to ensure the easy dissolution of the natural resin, and a non-drying oil having an iodine value of not more than 100 are used, easy and even dissolution and mixing of the natural resin and the phosphate-based extreme pressure additive are facilitated so that a good, uniform coating film having a low coefficient of friction can easily be formed in a short period of time.

According to the embodiment, the paint composition is prepared by mixing and blending together 15 to 30 wt% of phosphate-based extreme pressure additive, 3 to 12 wt% of natural resin, and 10 to 65 wt% of liquid oils and fats. Therefore, in addition to being capable of forming a paint composition having stable characteristics through good, even mixing of the phosphate-based extreme pressure additive, the natural resin and the liquid oils and fats, the embodiment facilitates operation of forming a coating film. A coating film that offers a low coefficient of friction and a stable torque/axial tension relationship can easily be formed at low cost.

Although the embodiment described above uses a high-strength hexagon head bolt 2 and a hexagon nut 3 as fastening members, any other fastening means that can be tightened by screwing, such as, for example, a Torshear-type high-strength bolt or a set screw, which does not have a head, may be used instead of a high-strength hexagon head bolt 2. The aforementioned Torshear-type high-strength bolt has an oval head, which is located at an end of the shank of the bolt and has a flat seat face facing towards the other end of the shank, and a pin tail which is provided at the other end of the shank and has a plurality of grooves extending in the axial direction. A break-off groove in the shape of a V-groove extending in the circumferential direction is formed between said pin head and the shank.

Although the above explanation refers to the embodiment which include a plurality of washers, the invention is also applicable to cases where the fastening system is provided with only a single washer or no washer.

Furthermore, according to the embodiment, both the high-strength hexagon head bolt 2 and the hexagon nut 3 are coated with a paint composition. However, a coating film may be formed on only one of them, on either one of or both the external threaded portion 10 or the internal threaded portion (not shown), or on the washers 4.

The material for the fastening members is not limited to steel, and various nonferrous metals, such as stainless steel alloys, aluminum alloys or brass, can also be used. Examples of other permissible materials include plastics, such as epoxy resin or polyamide resin, glass and ceramics, provided that the fastening member is not made of wood or a similar material having the properties of permitting the paint composition to permeate therein and that at least the surface of the threaded portion to be screwed to another member is plated or otherwise covered with a metal.

The phosphate-based extreme pressure additive in the paint composition is not limited to a phosphoric ester, and any other material can be used, provided that it has the ability of forming a film by reacting with the metal that either constitutes the fastening member or covers the surface of the fastening member by plating or any other appropriate means.

Any natural resin that can be dissolved in the drying oil, without having to use water or an organic solvent, and has the ability of forming a film can be used as the natural resin in the paint composition.

The liquid oils and fats in the paint composition are not limited to mixed oils consisting of a drying oil and a non-drying oil, and any liquid oils and fats can be used, provided that it has the ability of dissolving the natural resin so as to form a coating film containing the natural resin without necessitating drying by heating and is free from the possibility of causing changes in the properties of the coating film. However, mixed oils that not only satisfy these conditions but are also inexpensive and have no or little unpleasant smell are most desirable.

The mixing ratio of the paint composition is not limited to 15 to 30 wt% of the phosphate-based extreme pressure additive, 3 to 12 wt% of the natural resin and 10 to 65 wt% of the liquid oils and fats; an appropriate mixing ratio can be used whenever necessary, in accordance with various factors, such as the phosphate-based extreme pressure additive, the natural resin or the liquid oils and fats to be used, the shape, the surface conditions or the material of the fastening member, etc.

### POSSIBLE INDUSTRIAL APPLICATION

As described above, a fastening member, its paint composition, and a fastening system according the present invention can be used as, for example, a bolt set or other fastening system of an air plane, a fastening member of said fastening system and a paint composition for such a fastening member.

## Claims

1. A paint composition to be applied to a fastening member and including:
a phosphate-based extreme pressure additive having the function of reacting under high temperature and high pressure with a fastening member and bonding in the form of a film to said fastening member, which has a metal at least on its surface and is intended to be fastened to another object by screwing;
a natural resin; and
liquid oils and fats to permit said phosphate-based extreme pressure additive to be mixed with almost complete evenness and said natural resin dissolved therein.

2. A paint composition for a fastening member as claimed in claim 1, wherein the phosphate-based extreme pressure additive is a phosphoric ester.

3. A paint composition for a fastening member as claimed in claim 1 or claim 2, wherein the liquid oils and fats contain a drying oil and a non-drying oil.

4. A paint composition for a fastening member as claimed in claim 3, wherein:
the drying oil has an iodine value of not less than 130 and the same polarity as the natural resin contained in the paint composition, and
the non-drying oil has an iodine value of not more than 100.

5. A paint composition for a fastening member as claimed in any one of the claims from claim 1 claim 4, wherein:
the mixing ratio of the phosphate-based extreme pressure additive is in the range of 15 to 30 wt%;
the mixing ratio of the natural resin is in the range of 3 to 12 wt%; and
the mixing ratio of the liquid oils and fats is in the range of 10 to 65 wt%.

6. A fastening member **characterized in that** a paint composition as claimed in any one of the claims from claim 1 to claim 5 is applied to at least a threaded portion of the fastening member so as to form a coating film of the paint composition on said threaded portion.

7. A fastening system including two fastening members to be screwed to each other, wherein a paint composition as claimed in any one of the claims from claim 1 to claim 5 is applied to at least the threaded portion of either one of or both fastening members so as to form a coating film of the paint composition on said threaded portion.
